# EUROPÄISCHE PATENTANMELDUNG

(11) **EP 0 865 750 A2**
(43) Veröffentlichungstag der Anmeldung: **23.09.1998**
(21) Anmeldenummer: 98104585.9
(22) Anmeldetag: 13.03.1998
(51) Int. Cl.: A47K 1/09

(54) **Vorrichtung zur Halterung von Gegenständen, insbesondere von Toilettenartikeln**

(30) Priorität: 18.03.1997 DE 29704867 U
(71) Anmelder: Aquis GmbH, 9445 Rebstein (CH)
(72) Erfinder: Schrott, Harald, 88131 Lindau (DE); Wawrla, Andreas, 9443 Widnau (CH)
(74) Vertreter: Patentanwälte Eisele, Otten & Roth

(57) **Zusammenfassung**

Es wird eine Vorrichtung zur Befestigung und Ablage von Toilettenartikeln (1) vorgeschlagen, die einfach anzubringen, wieder entfernbar und auch unter engen Raumverhältnissen einsetzbar ist. Dies wird erfindungsgemäß dadurch erreicht, daß ein Tragelement (2) mit Befestigungsmitteln (3) zur Befestigung an einer Wascharmatur (4) vorgesehen wird.

## Beschreibung

Die Erfindung betrifft eine Vorrichtung zur Halterung von Gegenständen, insbesondere von Toilettenartikeln nach dem Oberbegriff des Anspruchs 1.

Für die diversen Toilettenartikel, wie Seifenschalen, Glashalter, Spiegel sowie elektrisch betriebene Toilettenartikel wie Mundduschen, Zahnbürsten, Rasiergeräte und so weiter, müssen entweder Halterungen oder Ablagen an der Wand des Badezimmers bzw. der Toilette angebracht oder aber eine entsprechende Ablagefläche auf Möbelstücken vorgesehen werden.

Die Erfindung hat die Aufgabe, eine weitere Möglichkeit zur Befestigung und Ablage von Toilettenartikeln vorzuschlagen, die einfach anzubringen und wieder entfernbar ist und insbesondere auch unter engen Raumverhältnissen problemlos einzusetzen ist.

Diese Aufgabe wird ausgehend von bisherigen Halterungsvorrichtungen durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, daß ein Tragelement vorhanden ist, das Befestigungsmittel zur Befestigung an einer Wascharmatur umfaßt.

Insbesondere unter engen Raumverhältnissen bietet die Befestigung an der Armatur eine besonders platzsparende Lösung. Zudem kann ein derartiges Tragelement an einer Armatur problemlos demontierbar ausgebildet sein.

In einer bevorzugten Ausführungsform der Erfindung wird das Tragelement mit elektrischen Leitungen versehen. Dies hat den Vorteil, daß die von dem Tragelement gehalterten Toilettenaccessoires, die u. a. auch in Form von elektrisch betreibbaren Geräten wie Mundduschen, Zahnbürsten oder Rasierapparaten vorliegen können, unmittelbar durch das Tragelement mit Strom zu versorgen sind. Dies bietet insbesondere dann Vorteile, wenn die Armatur selbst eine elektrisch betriebene Armatur ist.

In diesem Fall kann die Stromzufuhr für die elektrisch betreibbaren Geräte gemeinsam mit der Stromzufuhr für die elektrisch betriebene Armatur verlegt sein. In einer besonders vorteilhaften Ausführungsvariante könnte sogar das gleiche Netzteil für den Betrieb der Armatur sowie für den Betrieb eines sonstigen elektrisch betreibbaren Toilettenartikels, wie Zahnbürsten, Rasierapparate, Mundduschen usw., verwendet werden.

Besondere Vorteile bietet dies dann, wenn diese Geräte in Form von Akku-Geräte vorliegen, wie dies heutzutage üblicherweise der Fall ist. Das Trägerelement kann hierbei als Träger für entsprechende Ladestationen verwendet werden, wobei die Stromzufuhr über die Armatur erfolgt.

In einer vorteilhaften Ausführungsvariante der Erfindung werden hierzu Kontakte zwischen der Armatur und dem Tragelement vorgesehen. Hierdurch wird die elektrische Verbindung mit dem Anbringen des Tragelementes an der Armatur ohne weitere Anschlußmaßnahme hergestellt.

Vorteilhafterweise dient das Tragelement dazu, einen oder mehrere Aufsätze für eines oder mehrere Toilettenaccessoires zu haltern. Im Falle eines Trägerelementes mit elektrischer Leitung empfiehlt es sich hierbei, an dem jeweiligen Aufsatz Kontakte für die elektrische Verbindung zu den elektrisch angetriebenen Toilettenartikel anzubringen. Die über das Trägerelement an der Armatur gehalterten Aufsätze dienen somit unmittelbar als Ladestation für die Geräte wie Mundduschen, Zahnbürsten, Rasierapparate, usw..

In einem vorteilhaften Ausführungsbeispiel der Erfindung umfassen die Befestigungsmittel des Trägerelementes wenigstens eine die Armatur wenigstens teilweise umschließende Schale. Bevorzugt umschließt diese Schale die Armatur so weit, daß das Trägerelement bereits durch diese Umschließung an der Armatur gehaltert ist.

Vorzugsweise wird diese Schale wenigstens teilweise aus elastischem federndem Material ausgebildet, so daß sie unter einer gewissen Ausdehnung auf die Armatur aufsteckbar ist und dort verrastet. Ein derartiges Trägerelemente ist besonders leicht auf die Armatur zu stecken und dort wieder zu entfernen.

Ein Ausführungsbeispiel der Erfindung ist in der Zeichnung dargestellt und wird nachfolgend anhand der Figur näher erläutert.

Im einzelnen zeigen
- Fig. 1: eine Wascharmatur mit erfindungsgemäßer Halterung,
- Fig. 2: eine derartige Halterung ohne Armatur,
- Fig. 3: eine Armatur mit erfindungsgemäßer Halterung für eine elektrische Zahnbürste und
- Fig. 4: eine Vorrichtung gemäß Fig. 3 ohne Armatur.

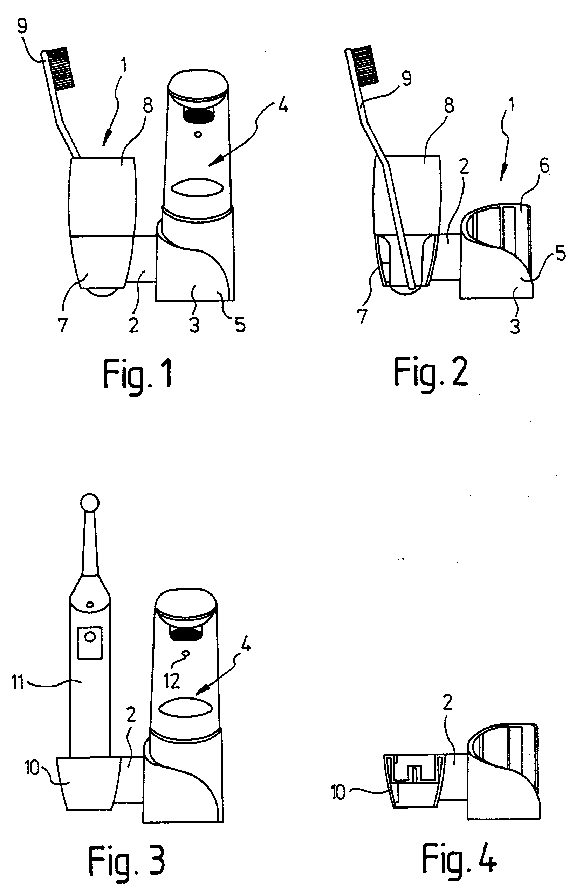

Die Vorrichtung zur Halterung von Toilettenartikeln 1 gemäß den Fig. 1 und 2 umfaßt ein Trägerelement 2 mit einer Befestigungsschale 3. Die Befestigungsschale 3 umschließt in aufgestecktem Zustand die Armatur 4, so daß das Trägerelement 2 an der Armatur 4 befestigt ist. Hierzu ist die Schale 3 wenigstens teilweise elastisch und rückfedernd ausgebildet, so daß die Endbereiche 5, 6 beim Aufstecken auf die Armatur 4 aufweiten und anschließend wieder zurückfedern können.

Am Trägerelement 2 ist ein Aufsatz 7 befestigt, der vorliegend zur Halterung eines Zahnputzglases 8 mit eingesteckter Zahnbürste 9 dient.

Die Ausführungsvariante gemäß den Fig. 3 und 4 entspricht im wesentlichen der vorbeschriebenen Ausführungsform. Der Aufsatz 10 ist nunmehr jedoch als Aufnahme für eine elektrische Zahnbürste 11 ausgebildet. Die elektrische Zahnbürste 11 kann über nicht näher dargestellte Kontakte im Innern des Aufsatzes 10 geladen werden.

Die Stromversorgung kann hierbei über nicht näher dargestellte Kontakte im Träger 2 bzw. der Bestigungsschale 3 über die Armatur 4 hergestellt werden. Die Armatur 4 in der dargestellten Form stellt eine elektrisch betreibbare und elektronisch über einen Sensor 12 steuerbare Armatur dar. Gegebenenfalls kann für den als Ladestation dienenden Aufsatz 10 ein ohnehin in der Armatur 4 vorhandenes Netzteil verwendet werden. Andernfalls können die entsprechenden stromführenden Kabel zugleich mit der Stromversorgung der Armatur 4 verlegt, durch die Armatur hindurchgeführt und über entsprechende Kontakte in das Trägerelement 2 eingeleitet werden.

Eine erfindungsgemäße Vorrichtung 1 kann auch mehrere Trägerelemente 2 oder mehrere Aufsätze 7, 10 beinhalten, so daß weitere Toilettenaccessoires gehaltert und gegebenenfalls mit Strom versorgbar sind. Die Befestigungsmittel sind nicht auf die dargestellte Befestigungsschale 3 beschränkt, die jedoch ein besonders leicht aufsteckbares und entfernbares Befestigungsmittel bilden.
- 1: Vorrichtung
- 2: Trägerelement
- 3: Befestigungsschale
- 4: Armatur
- 5: Endbereiche
- 6: Endbereiche
- 7: Aufsatz
- 8: Zahnputzglas
- 9: Zahnbürste
- 10: Aufsatz
- 11: elektrische Zahnbürste
- 12: Sensor

## Patentansprüche

1. Vorrichtung (1) zur Halterung von Gegenständen, insbesondere Toilettenartikeln, dadurch gekennzeichnet, daß ein Trägerelement (2) vorhanden ist, das Befestigungsmittel (3) zur Befestigung an einer Wascharmatur (4) umfaßt.

2. Vorrichtung nach Anspruch 1 dadurch gekennzeichnet, daß das Trägerelement lösbar an der Armatur (4) befestigt ist.

3. Vorrichtung nach einem der vorgenannten Ansprüche dadurch gekennzeichnet, daß das Trägerelement elektrische Leitungen aufweist.

4. Vorrichtung nach einem der vorgenannten Ansprüche dadurch gekennzeichnet, daß zwischen Armatur (4) und Trägerelement (2) elektrische Kontakte vorgesehen sind.

5. Vorrichtung nach einem der vorgenannten Ansprüche dadurch gekennzeichnet, daß die Vorrichtung (1) elektrische Kontakte zu elektrisch betriebenen Toilettenartikeln aufweist.

6. Vorrichtung nach einem der vorgenannten Ansprüche dadurch gekennzeichnet, daß die Befestigungsmittel eine die Armatur wenigstens teilweise umschließende Schale umfassen.

7. Vorrichtung nach einem der vorgenannten Ansprüche dadurch gekennzeichnet, daß die Befestigungsmittel eine Verrastung umfassen.
